# EUROPEAN PATENT SPECIFICATION

(11) **EP 1 193 986 B1**
(45) Date of publication and mention of the grant of the patent: **03.08.2005**
(21) Application number: 01300578.0
(22) Date of filing: 23.01.2001
(51) Int. Cl.: H04Q 7/32

(54) **Method and system of remotely controlling a portable terminal and a computer product**
Verfahren und System zur Fernsteuerung eines tragbaren Endgerätes und Computerprodukt
Procédé et système pour télécommander un terminal portable et un produit informatique

(30) Priority: 27.09.2000 JP 2000295074
(43) Date of publication of application: 03.04.2002
(60) Divisional application: 04005455.3
(73) Proprietor: FUJITSU LIMITED, Kawasaki-shi, Kanagawa 211-8588 (JP)
(72) Inventor: Takae, Naohito, Nakahara-ku, Kawasaki, Kanagawa 211-8588 (JP); Tani, Hiroyuki, Fujitsu Nigashi-Hok.Sys. Eng. Ltd., Obihiro-shi, Hokkaido 080-0016 (JP); Fujikawa, Kazuhiro, Fujitsu Aomori Sys. Eng. Ltd., Nogi Aomori-shi, Aomori 030-0192 (JP)
(74) Representative: Stebbing, Timothy Charles

(56) References cited:
- EP-A- 0 562 890
- EP-A- 0 899 973
- WO-A-98/58506
- US-A- 5 418 837

## Description

The present invention relates to a technology of remotely controlling a portable terminal with an external device. The portable terminal may be of the type having both a device main body provided with a built-in memory, and an add-on memory such as an attachable/detachable storage medium.

Recently, portable telephones (mobile phones, cellphones) have been widely used. Some of these portable telephones are provided with a storage medium (there are many types of storage media available in the market) in its telephone main body. Accordingly, such a portable telephone can function not only as a communication terminal, but also as an e-commerce (electronic commerce) terminal. More specifically, the recent portable telephone includes an ME (Module Element) that realizes a function as a telephone main body, a SIM card (Subscriber Identity Module Card) that realizes a function as a subscriber identifying module, and an IC card (Integrated Circuit Card) that functions in various ways as an external storage medium (for example, this may be a credit card).

Along with the spread of functions realized by the portable telephone, there has been an increasing need to change these functions to meet the users' (subscribers') request. When the subscriber wishes to change the settings of the portable telephone, a communication provider has to change the functions of the ME, SIM card, and IC card by remote control (i.e., by wireless communication).

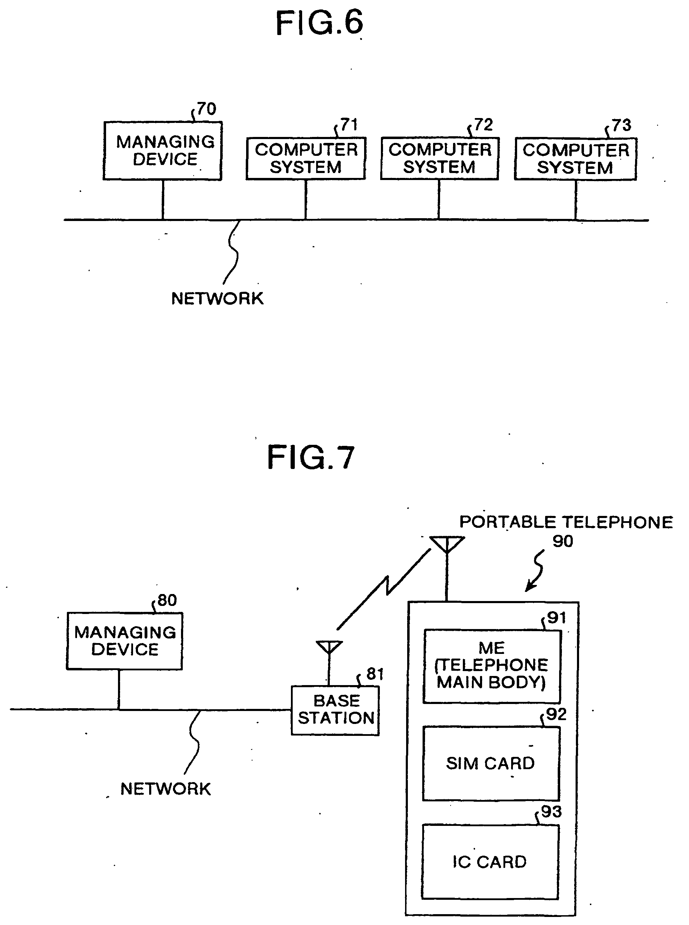

There has been known a method of remotely controlling a plurality of network-linked computer systems using e-mail (electronic mail). Fig. 6 shows a conventional remote control method in which a plurality of computer systems are controlled remotely. A managing device 70 remotely controls a plurality of computer systems 71, 72, and 73 by sending a setting changing e-mail to each, so that, upon receipt of the setting changing e-mail, each of the computer systems 71, 72, and 73 changes its settings to the one instructed in the setting changing e-mail.

The foregoing method of remotely controlling a plurality of computer systems can be adapted to remotely control a portable telephone composed of the ME, SIM card, and IC card. Fig. 7 shows a case in which a plurality of portable telephones are remotely controlled. A managing device 80 changes the function of each of an ME 91, an SIM card 92, and an IC card 93 individually by sending, via a base station 81, an ME setting changing mail, an SIM card setting changing mail, and an IC card setting changing mail separately to a portable telephone 90 containing these elements.

Conventionally, when the subscriber wishes to change the set-ups for the functions of the ME, SIM card, and IC card collectively, the subscriber is required to send a separate mail for each. However, this has the disadvantage of leading to extra work. In particular, because it is difficult to ensure synchronization, communication is disabled if the portable telephone receives the setting changing mail for the SIM card before the one for the ME.

Furthermore, conventionally, when the subscriber wishes to change the set-up of a newly inserted SIM card or IC card, or to change the set-up of a new ME into which the SIM card or IC card is reinserted in the same manner as before, the subscriber has to do so by sending a mail again. This poses a problem that efficiency of the set-up change in the portable telephone is not satisfactory.

It is therefore desirable to provide a technology by which it is possible to efficiently change the settings of portable terminals.

EP-A-0 899 873 discloses a method and a system according to the preamble of each of the corresponding independent claims. When a short message including command data addressed to the subscriber identification card fitted to a mobile phone is received by the mobile phone, the processing means of the mobile phone instigate the storage of the message in buffer devices of the memory means of the mobile phone and transfer the message to the SIM card via an access interface. The processing means of the SIM card execute the commands contained in the short message that they receive, which leads to elimination of the data corresponding to these commands from the short message containing it. Thus, only the setting changing of a single SIM card is disclosed by the above process.

According to EP-A-0 562 890, in a mobile communication network, if the user of a mobile telephone wishes to change the functions available to him, he notifies the supplier accordingly and the supplier arranges, via a service center, for a suitable signal to be stored in the network either at the service center or at a mobile switching center (MSC). The MSC immediately tries to send a short message to the mobile telephone without waiting for the mobile telephone to be activated. If this fails, due to the mobile telephone being switched off, the MSC will keep trying for a predetermined period, until successful; otherwise, the next time the user uses the network, by activation of the mobile telephone, the MSC identifies such use by noting the unique identifier of the user associated with a SIM contained in the mobile telephone, and immediately sends a signal to the mobile telephone which causes the SIM to re-configure itself according to the newly desired functions. Again, however, only the use of a single SIM card is discussed.

US-A-5 418 837 discloses a technique for upgrading a mobile telephone involving the use of a software upgrading module card which is temporarily inserted into the mobile telephone. A handshaking procedure is carried out prior to upgrading so as to verify that the correct telephone is being upgraded.

Thus, the prior art deals with the changing of settings in a single mobile telephone or SIM card, but does not provide a solution to the above-mentioned difficulty of changing the set-ups for the functions of a main body, SIM card and IC collectively as mentioned above.

According to a first aspect of the invention, there is provided a portable terminal remote control method of remotely controlling a portable terminal from an external device, said portable terminal having a) a main body provided with a built-in memory, and b) an attachable/detachable storage medium, the method comprising:
a setting changing mail sending step of sending a setting changing mail, by said external device to said portable terminal, that collectively changes the contents of said built-in memory and said storage medium of said portable terminal; and
a storing step of storing the received setting changing mail in said built-in memory; characterised by:
   a step of accepting a request by said external device related to a change of setting in said portable terminal from a user of said portable terminal, said setting changing mail sending step being performed in response to the received request;
   said setting changing mail including a computer program that adds, deletes or changes a function of said portable terminal by collectively changing the contents of said built-in memory and said storage medium of said portable terminal; and
   a medium updating step of, when said storage medium is replaced with another storage medium, updating the contents of said another storage medium by running the computer program contained in the setting changing mail stored in said built-in memory.

According to a second aspect of the invention, there is provided a portable terminal remote control system having at least one external device and at least one portable terminal and capable of remotely controlling said portable terminal from said external device, said portable terminal having a main body provided with a built-in memory, and an attachable/detachable storage medium,
wherein said external device comprises:
a setting changing mail sending unit which is adapted to send a setting changing mail, to said portable terminal collectively changing the contents of said built-in memory and said storage medium of said portable terminal; and
wherein said portable terminal device comprises a processor which is adapted to store the received setting changing mail in said built-in memory; characterised by:
said external device further comprising an accepting unit which is adapted to accept a request related to a change of setting in said portable terminal from a user of said portable terminal, said setting changing mail sending unit being arranged to send the setting changing mail in response to the received request, said setting changing mail including a computer program which adds, deletes or changes a function of said portable terminal by collectively changing the contents of said built-in memory and said storage medium of said portable terminal; and
said processor being further adapted when said storage medium is replaced by another storage medium to update the contents of said another storage medium by running the computer program contained in the setting changing mail stored in said built-in memory and by means of a processor-to-processor communication between said processor and a control section of said another storage medium.

According to a third aspect of the invention, there is provided a program for allowing an external device to remotely control a portable terminal composed of a main body provided with a built-in memory and an attachable/detachable storage medium, characterized by program code means causing a computer to carry out':
a setting changing mail sending step of sending a setting changing mail, by said external device to said portable terminal, that collectively changes the contents of said built-in memory and said storage medium of said portable terminal;
a storing step of storing the received setting changing mail in said built-in memory; and
a step of accepting a request by said external device related to a change of setting in said portable terminal from a user of said portable terminal, said setting changing mail sending step being performed in response to the received request;
said setting changing mail including a computer program that adds, deletes or changes a function of said portable terminal by collectively changing the contents of said built-in memory and said storage medium of said portable terminal; and
a medium updating step of, when said storage medium is replaced with another storage medium, updating the contents of said another storage medium by running the computer program contained in the setting changing mail stored in said built-in memory.

Thus, in the present invention a user sends a request to an external device to effect a change in the setting of his/her portable terminal. Upon receipt of such a request, the external device sends a mail (e-mail, message or data file) to the portable terminal. This mail contains a computer program which changes a part or all of the content of the memory of the portable terminal thereby changing the setting in the portable terminal. Therefore, the setting of the portable terminal can be changed'efficiently.

Reference is made, by way of example, to the accompanying drawings in which:-
Fig. 1 is a view depicting an arrangement of a portable telephone remote control system in accordance with an embodiment of the present invention.
Fig. 2 is a block diagram depicting an arrangement of a remote control center 10 shown in Fig. 1.
Fig. 3 is a block diagram depicting an arrangement of a portable telephone 20 shown in Fig. 1.
Fig. 4 is a flowchart detailing part of the operation in an embodiment of the present invention.
Fig. 5 is a flowchart detailing another part of the operation in the embodiment of the present invention.
Fig. 6 is a view explaining a prior art remote control technology for computer systems.
Fig. 7 is a view explaining a prior art remote control technology for a portable telephone.

A preferred embodiment of a portable terminal remote control method of the present invention is described below with reference to the accompanying drawings. This embodiment will be explained by way of a portable telephone remote control system using the portable terminal remote control method of the present invention.

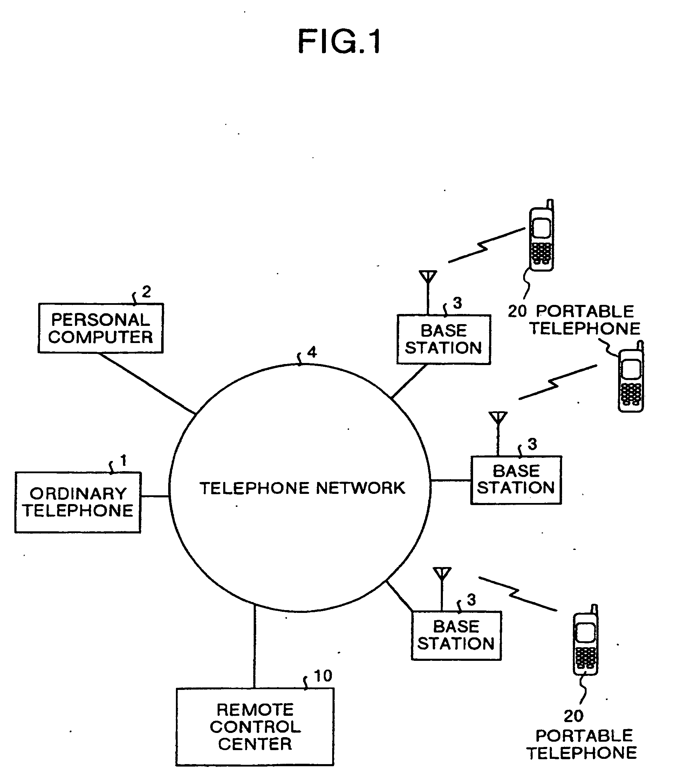

An arrangement of a portable telephone remote control system in accordance with the embodiment of the present invention will now be explained. Fig. 1 is a view depicting an arrangement of the portable telephone remote control system. The portable telephone remote control system is formed by linking to a telephone network 4 an ordinary telephone (fixed-line handset) 1, a personal computer 2, a remote control center 10 that is owned by a communication provider as a server, and a portable telephone 20 through a base station 3.

Schematically, the remote control center 10 accepts a request related to a set-up change in the portable telephone 20 from the subscriber of the portable telephone 20 through the ordinary telephone 1, personal computer 2, or the portable telephone 20. Then, the remote control center 10 changes the setting in the portable telephone 20 by means of remote control by sending a setting changing application suitable to the request to the portable telephone 20 owned by said subscriber.

The settings in the portable telephone 20 are changed by sending a setting changing application to the portable telephone 20 in the form of a telegraphic message (e-mail, data file) so as to collectively change the setting in the telephone main body and storage medium forming the portable telephone 20.

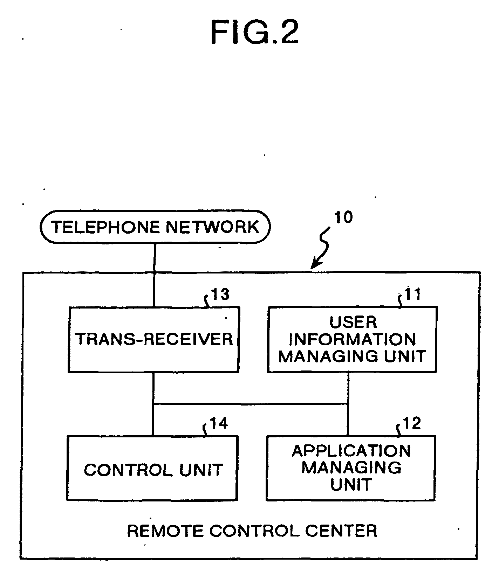

Next, the following description will describe an arrangement of the remote control center 10 shown in Fig. 1. Fig. 2 is a block diagram depicting an arrangement of the remote control center 10 shown in Fig. 1. As shown in the drawing, the remote control center 10 shown in Fig. 1 comprises a user information managing unit 11, an application managing unit 12, a trans-receiver (transceiver or I/O interface) 13, and a control unit 14.

Generally, the remote control center 10 not only controls a communication among the ordinary telephone 1, personal computer 2, and portable telephone 20, all linked to the telephone network 4, but also runs a job of changing the setting in the portable telephone 20 by sending a setting changing application to the portable telephone 20. The details of the communication control job are the same as that in a general network managing station. Thus, the explanation of the foregoing is omitted herein, and the following description will describe only the setting changing job.

The user information managing unit 11 manages subscriber identity information of the subscriber of the portable telephone 20. More specifically, the user information managing unit 11 stores and manages useful information in authenticating the subscriber's identification, such as the telephone number of the portable telephone 20, the name of the subscriber, and his password, and useful information in determining the setting subject to changing, such as the current setting in the portable telephone 20.

The application managing unit 12 manages a setting changing application for changing the setting in the portable telephone 20. The setting changing application referred to herein is an application capable of collectively changing stored contents in the telephone main body and storage media forming the portable telephone 20. In this example, these elements comprise a Module Element (hereafter, ME), a SIM card (Subscriber Identity Module Card), and an IC card (Integrated Circuit Card).

For example, functions of the setting changing application include the change from a ring sound OFF mode to a ring sound ON mode, addition/change of a function realized by the telephone main body, SIM card, and IC card, a set-up change (in case of loss and theft) for disabling all the functions realized by the telephone main body, SIM card, and IC card, etc. These examples will be described more in detail below.

The trans-receiver 13 carries out.a communication related to the setting changing job among the ordinary telephone 1, personal computer 2, and portable telephone 20 via the telephone network 4. More specifically, the trans-receiver 13 receives information containing a request related to a set-up change in the portable telephone 20 from the subscriber of the portable telephone 20 through the ordinary telephone 1, personal computer 2, or portable telephone 20. When accepting the request, the trans-receiver 13 also receives useful information in authenticating the subscriber's identification, such as the telephone number of the portable telephone 20, the name of the subscriber, and his password. Also, the trans-receiver 13 sends a setting changing application suitable to the request to the portable telephone 20.

The control unit 14 carries out a job related to the setting changing job by controlling each component in the remote control center 10. More specifically, the control unit 14 authenticates the subscriber's identification as an authorized subscriber by comparing the telephone number of the portable telephone 20, the name of the subscriber, and his password received from the trans-receiver 13 with the user identity information managed by the user information managing unit 11. Upon authentication as the authorized subscriber, the control unit 14 determines a suitable setting changing application to the request related to the set-up change in the portable telephone 20 received from the trans-receiver 13 out of applications managed in the application managing unit 12.

Then, the control unit 14 generates a telegraphic message (mail) containing the setting changing application thus determined, and sends the mail to the portable telephone 20 from the transmission/reception of device 13. When sending the mail containing the setting changing application, the control unit 14 appends a set-up change identifier so as to be distinguished from other normal mails. If the portable telephone 20 cannot receive the setting changing application because its power is turned OFF or it is present in a communication disabled area, the control unit 14 keeps sending the setting changing application until the portable telephone 20 receives the same.

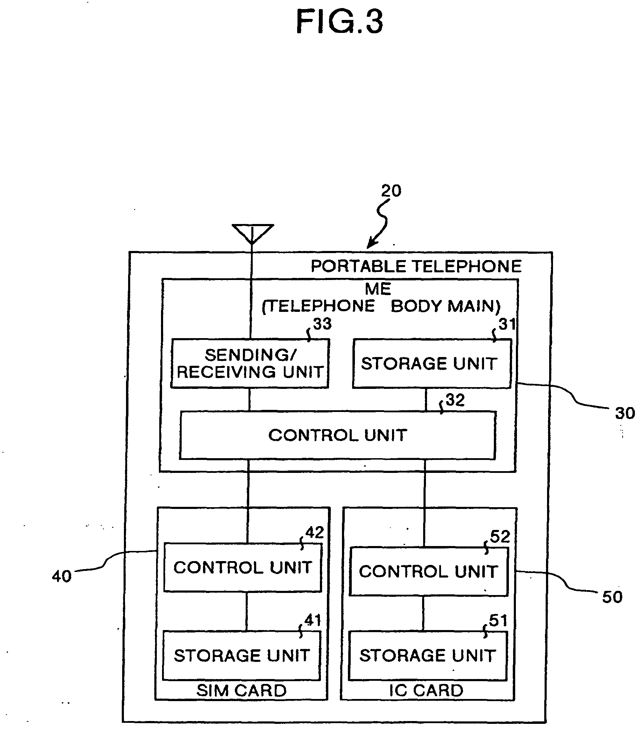

Next, the following description will describe an arrangement of the portable telephone 20 shown in Fig. 1 with reference to Fig. 3. Fig. 3 is a block diagram depicting the arrangement of the portable telephone 20 shown in Fig. 1. As shown in the drawing, the portable telephone 20 shown in Fig. 1 comprises an ME 30 serving as the telephone main body, a SIM card 40 serving as a storage medium and an IC card 50. In the present example, both the SIM card 40 and the IC card 50 are attachable/detachable to/from the portable telephone 20.

Schematically, the portable telephone 20 not only functions as a communication terminal or an e-commerce terminal by using the ME 30, SIM card 40, and IC card 50, but also runs a job of changing the setting in the ME 30, SIM card 40, and IC card 50 by receiving the setting changing application from the remote control center 10.

An arrangement of each of the ME 30, SIM card 40, and IC card 50 that allow functions as the communication terminal and e-commerce terminal is the same as that of a general portable telephone provided with an IC card. Thus, a detailed explanation of the foregoing is omitted herein, and the following description will briefly describe the function of each of the ME 30, SIM card 40, and IC card 50, and then the content related to the setting changing job.

As shown in Fig. 3, the ME 30 comprises a storage unit 31, a control unit 32, and a trans-receiver 33. Also, the SIM card 40 comprises a storage unit 41 and a control unit 42, and the IC card 50 comprises a storage unit 51 and a control unit 52. Preferably, both the SIM card 40 and IC card 50 are physically adapted so as to be attachable/detachable into and from recesses in the telephone main body. Although it is not shown in Fig. 3, it should be appreciated that the ME 30 also includes the usual components of a mobile phone including a keypad, microphone, loudspeaker and display, or more generally a key input unit (manipulation unit), a voice input unit, voice output unit, and a display unit.

The ME 30 realizes the functions of the telephone main body. More specifically, it realizes functions of: transmission/reception of sound, transmission/reception of mails, downloading various kinds of applications (Java applets), downloading music data or image data via the Internet, allowing a processor-to-processor communication with the SIM card 40 and IC card 50 inserted into the portable telephone 20, allowing a communication with another portable telephone, a POS terminal, or a vending machine by means of a wireless technique, such as Bluetooth, allowing a communication with a noncontact IC card using a noncontact IC card reader/writer, etc.

In the ME 30, the storage unit 31 stores programs and data of various kinds used in realizing the foregoing functions, and the control unit 32 runs a job to effect the foregoing functions by controlling the storage unit 31.

The SIM card 40 is a storage medium issued by a communication provider, and acts as a subscriber identity module that authenticates the subscriber's identification of the portable telephone 20. More specifically, in the SIM card 40, the storage unit 41 stores the subscriber identity information (electronic certificate) and terminal information required for communication with an external device and a cryptography program for encrypting the foregoing information, and the control unit 42 runs a job to effect the functions of the subscriber identity module by controlling the storage unit 41.

The IC card 50 is a storage medium issued by a third party other than the communication provider, and realizes various kinds of external storage functions for enhancing the functionality of the portable telephone 20. More specifically, the IC card 50 realizes functions such as a credit card, a cash card (debit card), tickets of various kinds, a commuting path (travel ticket or navigation device), a shop's trading stamp card (loyalty card), a patient's registration card (health data record), an image storage medium, and a music storage medium.

In the IC card 50, the storage unit 51 stores programs and data of various kinds used in realizing the foregoing functions, and the control unit 52 runs a job to effect the foregoing functions by controlling the storage unit 51.

The above description explained a case where the SIM card 40 and IC card 50 include their respective control units 42 and 52. It should be appreciated, however, that the present invention is not limited to the above case, and can be adapted to a case where neither the SIM card 40 nor IC card 50 is provided with their own control unit. In this case, the control unit 32 in the ME 30 makes the SIM card 40 and IC card 50 effect their functions by using the data and programs stored in their respective storage units 41 and 42.

The above description explained a case where the ME 30 SIM card 40, and IC card 50 effect their respective functions separately. It should be appreciated, however, that the present invention is not limited to the above case, and can be adapted to a case where the ME 30, SIM card 40, and IC card 50 effect one function as a whole. In this case, the ME 30, SIM card 40, and IC card 50 effect one function as a whole by using appropriate data and programs stored in their respective storage units 31, 32, and 33.

Also, the above description explained a case where the storage units 31, 32, and 33 provided respectively in the ME 30, SIM card 40, and IC card 50 store different data and programs. It should be appreciated, however, that the present invention is not limited to the above case, and can be adapted to a case where the storage units 31, 32, and 33 store the same data and programs. In this case, the ME 30, SIM card 40, and IC card 50 effect the same function.

As explained above, the portable telephone 20 realizes various kinds of functions by using the ME 30, SIM card 40, and IC card 50. Also, the portable telephone 20 runs a job of changing the setting related to these functions. The following description will describe the contents related to the setting changing job.

The trans-receiver (sending-receiving unit) 33 in the ME 30 receives a setting changing application that collectively changes the setting related to the functions realized by the ME 30, SIM card 40, and IC card 50 from the remote control center 10 via the telephone network 4. More specifically, the trans-receiver 33 receives a mail (electronic mail or other mode of data transfer provided by a wireless (network) that contains the setting changing application and is appended with the set-up change identifier.

The control section 32 in the ME 30 opens the received mail in response to the set-up change identifier appended to the same, and activates the setting changing application contained therein, whereby the setting related to the functions realized by the ME 30, SIM card 40, and IC card 50 are changed collectively. More specifically, the control section 32 accesses not only the ME 30, but also the SIM card 40 and IC card 50 (processor-to-processor communication), and changes the setting collectively by adding/deleting/changing the programs and data of various kinds in the ME 30, SIM card 40, and IC card 50.

Concrete examples of the set-up change include: a set-up change that collectively upgrades the version of certain functions realized by the ME 30, SIM card 40, and IC card 50, and a set-up change (set-up change in case of loss and theft) that collectively disables all the functions realized by the ME 30, SIM card 40, and IC card 50, etc.

In case that the ME 30, SIM card 40, and IC card 50 effect one function as a whole by using appropriate data and programs stored in their respective storage units 31, 32, and 33, a set-up change that changes the foregoing data and programs collectively is available. Also, in case that the storage units 31, 32, and 33 store the same data and programs, a set-up change that changes the foregoing data and programs collectively is available.

The above description explained a case where the setting in the ME 30, SIM card 40, and IC card 50 are changed by activating the setting changing application by means of the control unit 32 in the ME 30. It should be appreciated, however, that the present invention is not limited to the above case, and can be adapted to a case where the settings in the ME 30, SIM card 40, and IC card 50 are changed principally by the control unit 42 in the SIM card 40 or the control unit 52 in the IC card 50.

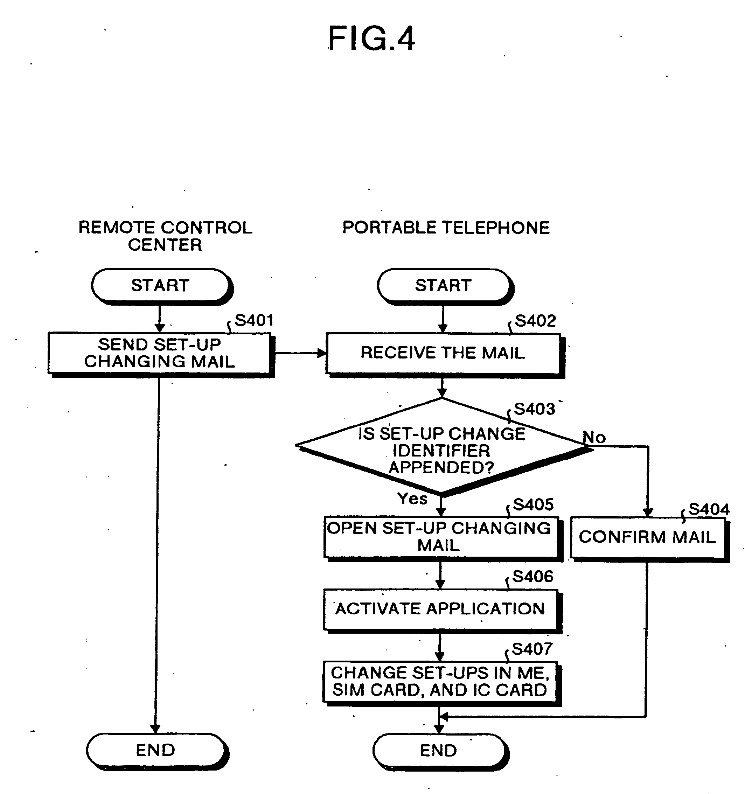

Next, the following description will describe part of the operation (setting changing job) in the embodiment of the present invention with reference to the operation flowchart of Fig. 4. The explanation will be given on the assumption that the remote control center 10 has completed the jobs of: accepting a request related to the set-up change, authenticating the subscriber's identification, and determining the setting changing application suitable to the request.

As shown in Fig. 4, the remote control center 10 sends the portable telephone 20 a mail containing the setting changing application that changes the setting in the ME 30, SIM card 40, and IC card 50 forming the portable telephone 20 (Step S401).

Then, the portable telephone 20 receives the mail containing the setting changing application from the remote control center 10 (Step S402), and judges whether the set-up change identifier is appended to the mail or not (Step S403).

Upon judging that the set-up change identifier is appended (Yes in Step S403), the portable telephone 20 automatically opens the mail containing the setting changing application in response to the set-up change identifier (Step S405).

Then, the portable telephone 20 activates the setting changing application contained in the opened mail (Step S406), and collectively changes the setting in the ME 30, SIM card 40, and IC card 50 forming the portable telephone 20 (Step 407). Upon judging that the set-up change identifier is not appended (No in Step S403), the portable telephone 20 judges that it is a normal mail and displays the content thereof (Step S404).

As described above, the remote control center 10 accepts a request related to the set-up change in the portable telephone 20 from the user of the portable telephone 20, and sends the portable telephone 20 a setting changing mail that collectively changes the storage contents in the ME SIM card 40, and IC card 50 in response to the accepted.request, whereby the portable telephone 20 collectively updates the storage contents in the ME 30, SIM card 40, and IC card 50 based on the setting changing mail. Thus, the setting in the ME 30, SIM card 40, and IC card 50 can be changed collectively by sending a communication mail only once, thereby making it possible to change the setting in the portable telephone 20 efficiently.

Furthermore, the ME 30 runs the application contained in the setting changing mail, so that the storage contents in the ME 30, SIM card 40, and IC card 50 are updated. Hence, the setting can be changed efficiently in the portable telephone 20 that realizes complicated functions.

In addition, the control section 32 in the ME 30 updates the storage contents in the storage unit 31 in the ME 30 by running the application contained in the setting changing mail, while at the same time, the storage contents in the storage units 41 and 51 provided respectively in the SIM card 40 and IC card 50 are updated by means of a processor-to-processor communication between the control section 32 in the ME 30 and the control sections 42 and 52 respectively provided with the SIM card 40 and IC card 50. Consequently, the setting can be changed efficiently in the portable telephone 20 provided with various kinds of storage media and thereby effecting various kinds of functions. In particular, the set-up change that disables the functions of the SIM card 40 and IC card 50 besides the ME 30 is effective in case of loss of the portable telephone 20.

Furthermore, the remote control center 10 sends a setting changing mail containing the application that collectively changes the ME 30, SIM card 40, and IC card 50 and appended with the set-up change identifier, and when the set-up change identifier is present in the mail, the portable telephone 20 activates the application contained in the mail, whereby the storage contents in the ME 30, SIM card 40, and IC card 50 are updated collectively. Thus, the setting can be changed efficiently without requiring the user to apply special manipulations to the portable telephone 20 for the set-up change. In particular, the set-up change that disables the function by means of remote control is effective in case of loss of the portable telephone 20.

In addition, upon acceptance of a request related to the set-up change in the portable telephone 20 from the user of the portable telephone 20, the remote control center 10 generates a setting changing mail that contains a suitable application to the accepted request. Thus, the setting in the portable telephone 20 can be changed efficiently as the user desires.

Furthermore, upon acceptance of a request related to the set-up change in the portable telephone 20 from the user of the portable telephone 20, the remote control center 10 authenticates the user's identification as the authorized subscriber, and upon authentication as the authorized subscriber, the remote control center 10 generates a setting changing mail that contains an application suitable to the accepted request. Consequently, it is possible to prevent a change of the setting in the portable telephone 20 as intended by a third party other than the subscriber.

The above description described a case where the portable telephone provided with the SIM card 40 and IC card 50 is remotely controlled. However, the present invention is not limited to the above case. That is, the present invention can be adapted to a case where an external device remotely controls any kind of portable terminal (for example, PDA, etc.) composed of a device main body provided with a built-in memory and an attachable/detachable storage medium.

Incidentally, the operation described above concerns a case where the portable telephone, in which the SIM card and IC card are inserted in the ME, receives the setting changing application and runs the setting changing job. The present invention involves a further operation. That is, even when a SIM card or IC card having a changed set-up is pulled out, and another SIM card or IC card is newly inserted, the portable telephone can run the same setting changing job for the new SIM card or IC card.

The embodiment of the present invention thus also comprises a setting changing job for a portable telephone, in which a SIM card having its set-up changed is pulled out, and a new SIM card is inserted. In this operation, the system arrangement of the portable telephone remote control system is the same as that shown in Fig. 1, the arrangement of the remote control center 10 is the same as that shown in Fig. 2, and the arrangement of the portable telephone 20 is the same as that shown in Fig. 3. Thus, the explanation of the foregoing is omitted, and the following description will describe only an operation (setting changing job on the newly inserted SIM card) in the embodiment of the present invention.

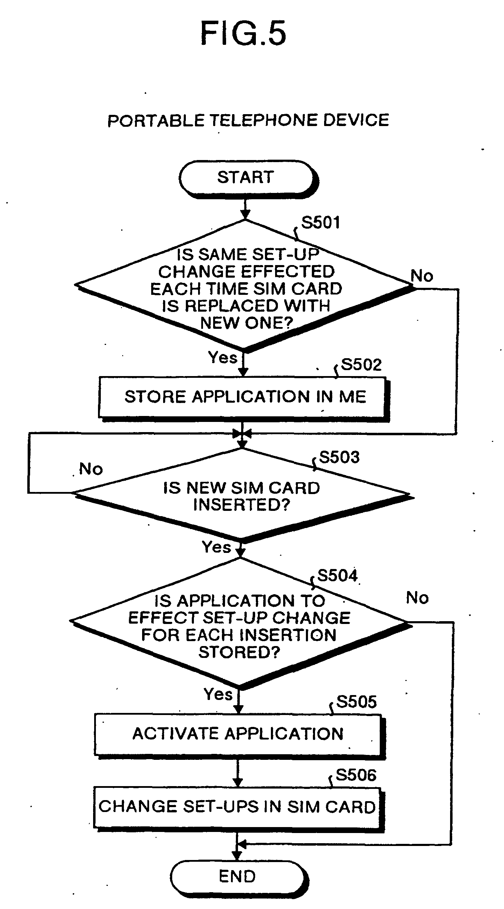

Fig. 5 shows a flowchart detailing this further operation, with the assumption that the setting changing job according to Figure 4 has been completed.

That is, the explanation will be given on the assumption that, upon acceptance of an additional request related to the set-up change in the portable telephone 20 specifying "to effect the same set-up change for the SIM card 40 each time it is replaced with a new one", the control unit 14 in the remote control center 10 has sent a setting changing application appended with an identifier specifying "to effect the same set-up change each time the SIM card is replaced with a new one" to the portable telephone 20, which accordingly has run the setting changing job according to Figure 4 by using the received setting changing application.

As shown in Fig. 5, upon completion of the setting changing job by using the setting changing application, if the portable telephone 20 judges that the setting changing application is the one specifying "to effect the same set-up change each time the SIM card is replaced with a new one" from the identifier (Yes in Step S501), the portable telephone 20 stores the setting changing application in the storage unit 31 in the ME 30 (Step S502).

When the SIM card 40 to which the setting changing job has been applied is pulled out and a new SIM card is inserted (Yes in Step S503), the portable telephone 20 judges whether the setting changing application specifying "to effect the same set-up change each time the SIM card is replaced with a new one" is stored in the storage unit 31 in the ME 30 (Step S504).

If so (Yes in Step S504), the portable telephone 20 activates the application (Step S505), and changes the setting in the newly inserted SIM card in the same manner as the replaced SIM card 40 (Step S506).

As explained above, according to the embodiment, when a setting changing mail is stored in the storage unit 31 in the ME 30 and the SIM card 40 is replaced with a new SIM card, the portable telephone 20 updates the storage contents in said latter SIM card by running the application contained in the stored setting changing mail. Consequently, when the user wishes to change the set-up of the newly inserted SIM card in the same manner as the replaced one, the portable telephone 20 does not have to receive the setting changing mail again from the remote control center 10, thereby making it possible to change the setting in the portable telephone 20 efficiently. In particular, the set-up change that disables the functions of the portable telephone is effective when a third party tries to use in bad faith someone else's lost portable telephone by inserting a new SIM card.

The above embodiment explained a case where the SIM card 40 is replaced with another SIM card. However, the present invention is not limited to this case. That is, the present invention can be adapted to a case where the IC card 50 is replaced with another IC card.

An embodiment of the present invention has been described above with reference to the accompanying drawings. However, concrete examples of the arrangement are not limited to the explained embodiment. That is, design modifications and the like in various manners without deviating from the subject of the present invention are included in the present invention.

For example, in the above embodiment, a SIM card 40 or an IC card 50 are physically inserted into a portable telephone; however, this is not essential and a storage medium may be associated with the portable telephone without necessarily being physically connected therewith.

The portable telephone remote control method explained in the embodiment can be achieved by running a prepared program by a computer, such as a personal computer and a workstation. Such a program is recorded in a computer-readable recording medium, such as a hard disk, a floppy disk, a CD-ROM, an MO, and a DVD, and run when read out from the recording medium by the computer. Also, such a program can be distributed by transmission via a network, such as the Internet.

As explained above, according to the present invention, in a portable terminal remote control method for allowing an external device to remotely control a portable terminal composed of a main body provided with a built-in memory and an associated (e.g. attachable/detachable) storage medium, a request related to a change of setting in the portable terminal from a user of the portable terminal is accepted, and a setting changing mail that collectively changes storage contents in the built-in memory and storage medium is sent to the portable terminal owned by said user in response to the request accepted. Consequently, the set-ups of the main body and storage medium can be changed collectively by sending a communication mail (set-up instruction) only once, thereby achieving an effect that the settings of the portable terminal can be changed efficiently.

Furthermore, in the present invention, in a portable terminal remote control method for a portable terminal composed of a main body provided with a built-in memory that is remotely controlled by an external device and an associated storage medium, a setting changing mail that is sent from the external device and collectively changes storage contents in the built-in memory and storage medium is received, and the storage contents in the built-in memory and storage medium are collectively updated based on the mail received. Consequently, the set-ups of the main body and storage medium can be changed collectively by sending a communication mail only once, thereby achieving an effect that the setting in the portable terminal can be changed efficiently.

Furthermore, preferably, the storage contents in the built-in memory are updated by running an application contained in the setting changing mail by a processor in the main body, and the storage contents of storage media (such as an IC card or subscriber identity module card) are updated by means of a processor-to-processor communication between the processor in the main body and a processor of each storage medium. Consequently, there can be achieved an effect that the setting can be changed efficiently even in a portable terminal that is provided with a plurality of storage media and thereby realizes various kinds of functions.

Furthermore, the setting changing mail is stored in the internal memory, and when the storage medium is replaced with another storage medium, the contents of that storage medium are updated by running the application contained in the setting changing mail stored in the internal memory. Consequently, when effecting the same change of setting to a newly inserted recording medium, it does not have to receive the setting changing mail from the external device again, thereby achieving an effect that the setting in the portable terminal can be changed effectively.

## Claims

1. A portable terminal remote control method of remotely controlling a portable terminal (20) from an external device (10), said portable terminal having a) a main body (30) provided with a built-in memory (31), and b) an attachable/detachable storage medium (40, 50), the method comprising:
a setting changing mail sending step of sending a setting changing mail, by said external device (10) to said portable terminal (20), that changes the contents of said built-in memory (31) and said storage medium' (40, 50) of said portable terminal; and
a storing step of storing the received setting changing mail in said built-in memory (31);
**characterised by**:
a step of accepting a request by said external device (10) related to a change of setting in said portable terminal(20) from a user of said portable terminal (20), said setting changing mail sending step being performed in response to the received request;
said setting changing mail including a computer program that adds, deletes or changes a function of said portable terminal (20) by collectively changing the contents of said built-in memory (31) and said storage medium (40, 50) of said portable terminal (20); and
a medium updating step of, when said storage medium (40, 50) is replaced with another storage medium, updating the contents of said another storage medium by running the computer program contained in the setting changing mail stored in said built-in memory (31) .

2. The portable terminal remote control method according to claim 1,
wherein in the setting changing mail sending step, said setting changing mail includes in addition to said computer program, a change of setting identifier.

3. The portable terminal remote control method according to claim 1 or 2 further comprising:
an authenticating step of, upon acceptance of the request related to the change of setting in said portable terminal (20) from the user of said portable terminal, checking whether the user is an authorized user or not, and generating the setting changing mail only when the user is an authorized user.

4. The portable terminal remote control method according to claims 1, 2 or 3,
wherein said storage medium (40, 50) is composed of an IC card (50) or a subscriber identity module card (40) issued by a communication provider, and provided with a processor (42, 52) and a memory (41, 51), a processor (32) in said main body (30) a updating the contents of said built-in memory (31) by executing said computer program contained in said setting changing mail, and said IC card (50) or subscriber identity module card (40) are updated by means of a processor-to-processor communication between the processor (32) in said main body and the processor (42, 52) in said IC card (50) or subscriber identity module card (40).

5. A portable terminal remote control system having at least one external device (10) and at least one portable terminal (20) and capable of remotely controlling said portable terminal (20) from said external device (10), said portable terminal having a main body (30) provided with a built-in memory (31), and an attachable/detachable storage medium (40, 50),
wherein said external device (10) comprises:
a setting changing mail sending unit (12, 14) which is adapted to send a setting changing mail, to said portable terminal (20) changing the contents of said built-in memory (34) and said storage medium (40,50) of said portable terminal (20); and
wherein said portable terminal (20) comprises a processor (32) which is adapted to store the received setting changing mail in said built-in memory (31); **characterised by**:
said external unit (10) further comprising an accepting unit (13,14) which is adapted to accept a request related to a change of setting in said portable terminal (20) from a user of said portable terminal (20), said setting changing mail sending unit (12, 14) being arranged to send the setting changing mail in response to the received request, said setting changing mail including a computer program which adds, deletes or changes a function of said portable terminal (20) by collectively changing the contents of said built-in memory (31) and said storage medium (40,50) of said portable terminal (20); and
said processor (32) being further adapted when said storage medium (40, 50) is replaced by another storage medium to update the contents of said another storage medium by running the computer program contained in the setting changing mail stored in said built-in memory (31) and by means of a processor-to-processor communication between said processor (32) and a control section (42, 52) of said another storage medium.

6. A program for allowing an external device (10) to remotely control a portable terminal (20) composed of a main body (30) provided with a built-in memory (31) and an attachable/detachable storage medium (40, 50), **characterized by** program code means causing a computer to carry out:
a setting changing mail sending step of sending a setting changing mail, by said external device (10) to said portable terminal (20), that changes the contents of said built-in memory (31) and said storage medium (40, 50) of said portable terminal (20);
a storing step of storing the received setting changing mail in said built-in memory (31);and
a step of accepting a request by said external device (10) related to a change of setting in said portable terminal (20) from a user of said portable terminal (20), said setting changing mail sending step being performed in response to the received request;
said setting changing mail including a computer program that adds, deletes or changes a function of said portable terminal (20) by collectively changing the contents of said built-in memory (31) and said storage medium (40, 50) of said portable terminal (20); and
a medium updating step of, when said storage medium (40, 50) is replaced with another storage medium, updating the contents of said another storage medium by running the computer program contained in the setting changing mail stored in said built-in memory (31).

## Patentansprüche

1. Fernsteuerungsverfahren für ein tragbares Terminal zur Fernsteuerung eines tragbaren Terminals (20) von einer externen Vorrichtung (10), wobei das tragbare Terminal a) einen Hauptkörper (30) hat, der mit einem eingebauten Speicher (31) versehen ist, und b) ein einsetzbares/entnehmbares Speichermedium (40, 50), welches Verfahren umfaßt:
einen Einstellungsveränderungs-Mail-Sendeschritt zum Senden einer Einstellungsveränderungs-Mail durch die externe Vorrichtung (10) zu dem tragbaren Terminal (20), wodurch der Inhalt des eingebauten Speichers (31) und des speichermediums (40, 50) des tragbaren Terminals verändert wird; und
einen Speicherschritt zum Speichern der empfangenen Einstellungsveränderungs-Mail in dem eingebauten Speicher (31);
**gekennzeichnet durch**:
einen Schritt zum Akzeptieren einer Forderung **durch** die externe Vorrichtung (10) in bezug auf eine Veränderung der Einstellung in dem tragbaren Terminal (20) von einem Nutzer des tragbaren Terminals (20), wobei der Einstellungsveränderungs-Mail-Sendeschritt als Antwort auf die empfangene Forderung ausgeführt wird;
welche Einstcllungsveranderungs-Mail ein Computerprogramm enthält, das eine Funktion des tragbaren Terminals (20) hinzufügt, löscht oder verändert, indem der Inhalt des eingebauten Speichers (31) und des Speichermediums (40, 50) des tragbaren Terminals (20) kollektiv verändert wird; und
einen Medienaktualisierungeschritt zum Aktualisieren, wenn das Speichermedium (40, 50) **durch** ein anderes Speichermedium ersetzt wird, des Inhaltes des anderen Speichermediums **durch** den Ablauf des Computerprogramms, das in der Einstellungsveränderungs-Mail enthalten ist, die in dem eingebauten Speicher (31) gespeichert ist.

2. Fernsteuerungsverfahren für ein tragbares Terminal nach Anspruch 1,
bei dem die Einstellungsveränderungs-Mail bei dem Einstellungsveränderungs-Mail-Sendeschritt zusätzlich zu dem Computerprogramm einen Einstellungsveränderungsidentifikator enthält.

3. Fernsteuerungsverfahren für ein tragbares Terminal nach Anspruch 1 oder 2, ferner mit:
einem Authentifizierungsschritt zum Prüfen, bei Akzeptanz der Forderung in bezug auf die Veränderung der Einstellung in dem tragbaren Terminal (20) von dem Nutzer des tragbaren Terminals, ob der Nutzer ein autorisierter Nutzer ist oder nicht, und zum Erzeugen der Einstellungsveränderungs-Mail nur, wenn der Nutzer ein autorisierter Nutzer ist.

4. Fernsteuerungsverfahren für ein tragbares Terminal nach Anspruch 1, 2 oder 3,
bei dem das Speichermedium (40, 50) aus einer IC-Karte (50) oder einer Teilnehmeridentifizierungsmodulkarte (40) gebildet ist, die durch einen Kommunikationsanbieter herausgegeben wird, und mit einem Prozessor (42, 52) und einem Speicher (41, 51) versehen ist, wobei ein Prozessor (32) in dem Hauptkörper (30) den Inhalt des eingebauten Speichers (31) aktualisiert, indem das Computerprogramm ausgeführt wird, das in der Einstellungsveränderungs-Mail enthalten ist, und die IC-Karte (50) oder die Teilnehmeridentifizierungsmodulkarte (40) durch eine Prozessor-Prozessor-Kommunikacion zwischen dem Prozessor (32) in dem Hauptkörper und dem Prozessor (42, 52) in der IC-Karte (50) oder der Teilnehmeridentifizierungsmodulkarte (40) aktualisiert wird.

5. Fernsteuerungssystem für ein tragbares Terminal, das wenigstens eine externe Vorrichtung (10) und wenigstens ein tragbares Terminal (20) hat und zur Fernsteuerung des tragbaren Terminals (20) von der externen Vorrichtung (10) in der Lage ist, welches tragbare Terminal einen Hauptkörper (30) hat, der mit einem eingebauten Speicher (31) versehen ist, und ein einsetzbares/entnehmbares Speichermedium (40, 50),
bei dem die externe Vorrichtung (10) umfaßt:
eine Einstellungsveränderungs-Mail-Sendeeinheit (12, 14), die dafür ausgelegt ist, eine Einstellungsveränderungs-Mail zu dem tragbaren Terminal (20) zu senden, die den Inhalt des eingebauten Speichers (31) und des Speichermediums (40, 50) des tragbaren Terminals (20) verändert; und
bei dem das tragbare Terminal (20) einen Prozessor (32) umfaßt, der dafür ausgelegt ist, die empfangene Einstellungsveränderungs-Mail in dem eingebauten Speicher (31) zu speichern; **dadurch gekennzeichnet, daß**:
die externe Einheit (10) ferner eine Akzeptanzeinheit (13, 14) umfaßt, die dafür ausgelegt ist, eine Forderung in bezug auf eine Veränderung der Einstellung in dem tragbaren Terminal (20) von einem Nutzer des tragbaren Terminals (20) zu akzeptieren, wobei die Einstellungsveränderungs-Mail-Sendeeinheit (12, 14) angeordnet ist, um die Einstellungsveränderungs-Mail als Antwort auf die empfangene Forderung zu senden, welche Einstellungsveränderungs-Mail ein Computerprogramm enthält, das eine Funktion des tragbaren Terminals (20) hinzufügt, löscht oder verändert, indem der Inhalt des eingebauten Speichers (31) und des Speichermediums (40, 50) des tragbaren Terminals (20) kollektiv verändert wird; und
der Prozessor (32) ferner dafür ausgelegt ist, um dann, wenn das Speichermedium (40, 50) durch ein anderes Speichermedium ersetzt wird, den Inhalt des anderen Speichermediums zu aktualisieren, durch den Ablauf des Computerprogramms, das in der Einstellungsveränderunge-Mail enthalten ist, die in dem eingebauten Speicher (31) gespeichert ist, und durch eine Prozessor-Prozessor-Kommunikation zwischen dem genannten Prozessor (32) und einer Steuersektion (42, 52) des anderen Speichermediums.

6. Programm zur Ermöglichung der Fernsteuerung eines tragbaren Terminals (20), das aus einem Hauptkörper (30), der mit einem eingebauten Speicher (31) versehen ist, und aus einem einsetzbaren/entnehmbaren Speichermedium (40, 50) gebildet ist, durch eine externe Vorrichtung (10), **gekennzeichnet durch** ein Programmcodemittel, wodurch bewirkt wird, daß ein Computer ausführt:
einen Einstellungsveränderungs-Mail-Sendeschritt zum Senden einer Einstellungsveränderungs-Mail **durch** die externe Vorrichtung (10) zu dem tragbaren Terminal (20), wodurch der Inhalt des eingebauten Speichers (31) und des Speichermediums (40, 50) des tragbaren Terminals (20) verändert wird;
einen Speicherschritt zum Speichern der empfangenen Einstellungsveränderungs-Mail in dem eingebauten Speicher (31); und
einen Schritt zum Akzeptieren einer Forderung **durch** die externe Vorrichtung (10) in bezug auf eine Veränderung der Einstellung in dem tragbaren Terminal (20) von einem Nutzer des tragbaren Terminals (20), wobei der Einstellungsveränderungs-Mail-Sendeschritt als Antwort auf die empfangene Forderung ausgeführt wird;
welche Einstellungsveränderungs-Mail ein Computerprogramm enthält, das eine Funktion des tragbaren Terminals (20) hinzufügt, löscht oder verändert, indem der Inhalt des eingebauten Speichers (31) und des Speichermediums (40, 50) des tragbaren Terminals (20) kollektiv verändert wird; und
einen Medienaktualisierungsschritt zum Aktualisieren, wenn das Speichermedium (40, 50) **durch** ein anderes Speichermedium ersetzt wird, des Inhaltes des anderen Speichermediums **durch** den Ablauf des Computerprogramms, das in der Einstellungsveränderungs-Mail enthalten ist, die in dem eingebauten Speicher (31) gespeichert ist.

## Revendications

1. Procédé de télécommande de terminal portable permettant de télécommander un terminal portable (20) depuis un dispositif externe (10), ledit terminal portable comportant a) un corps principal (30) muni d'une mémoire incorporée (31) et b) un support de stockage attachable/détachable (40, 50), le procédé comprenant :
une étape d'envoi de courrier de modification de réglage consistant à envoyer un courrier de modification de réglage au moyen dudit dispositif externe (10) sur ledit terminal portable (20), qui modifie le contenu de ladite mémoire incorporée (31) et dudit support de stockage (40, 50) dudit terminal portable ; et
une étape de stockage consistant à stocker le courrier de modification de réglage reçu dans ladite mémoire incorporée (31),
**caractérisé par** :
une étape d'acceptation d'une requête par ledit dispositif externe (10) qui est rapportée à une modification de réglage dans ledit terminal portable (20) en provenance d'un utilisateur dudit terminal portable (20), ladite étape d'envoi de courrier de modification de réglage étant réalisée en réponse à la requête reçue ;
ledit courrier de modification de réglage incluant un programme d'ordinateur qui additionne, supprime ou modifie une fonction dudit terminal portable (20) en modifiant de façon collective le contenu de ladite mémoire incorporée (31) et dudit support de stockage (40, 50) dudit terminal portable (20) ; et
une étape de mise à jour de support consistant à, lorsque ledit support de stockage (40, 50) est remplacé par un autre support de stockage, mettre à jour le contenu dudit autre support de stockage en déroulant le programme d'ordinateur qui est contenu dans le courrier de modification de réglage qui est stocké dans ladite mémoire incorporée (31).

2. Procédé de télécommande de terminal portable selon la revendication 1,
dans lequel, au niveau de l'étape d'envoi de courrier de modification de réglage, ledit courrier de modification de réglage inclut, en plus dudit programme d'ordinateur, un identificateur de modification de réglage.

3. Procédé de télécommande de terminal portable selon la revendication 1 ou 2, comprenant en outre :
une étape d'authentification consistant à, suite à l'acceptation de la requête qui est rapportée à la modification de réglage dans ledit terminal portable (20) en provenance de l'utilisateur dudit terminal portable, vérifier si oui ou non l'utilisateur est un utilisateur autorisé et à générer le courrier de modification de réglage seulement lorsque l'utilisateur est un utilisateur autorisé.

4. Procédé de télécommande de terminal portable selon la revendication 1, 2 ou 3,
dans lequel ledit support de stockage (40, 50) est constitué par une carte IC (50) ou par une carte de module d'identité d'abonné (40) qui est délivrée par un fournisseur de communication et qui est munie d'un processeur (42, 52) et d'une mémoire (41, 51), un processeur (32) dans ledit corps principal (30) mettant à jour le contenu de ladite mémoire incorporée (31) en exécutant ledit programme d'ordinateur qui est contenu dans ledit courrier de modification de réglage, et ladite carte IC (50) ou ladite carte de module d'identité d'abonné (40) est mise à jour au moyen d'une communication processeur à processeur entre le processeur (32) dans ledit corps principal et le processeur (42, 52) dans ladite carte IC (50) ou dans ladite carte de module d'identité d'abonné (40).

5. Système de télécommande de terminal portable comportant au moins un dispositif externe (10) et au moins un terminal portable (20) et permettant de télécommander ledit terminal portable (20) depuis ledit dispositif externe (10), ledit terminal portable comportant un corps principal (30) qui est muni d'une mémoire incorporée (31), et un support de stockage attachable/détachable (40, 50),
dans lequel ledit dispositif externe (10) comprend :
une unité d'envoi de courrier de modification de réglage (12, 14) qui est adaptée pour envoyer un courrier de modification de réglage sur ledit terminal portable (20) qui modifie le contenu de ladite mémoire incorporée (31) et dudit support de stockage (40, 50) dudit terminal portable (20) ; et
dans lequel ledit terminal portable (20) comprend un processeur (32) qui est adapté pour stocker le courrier de modification de réglage reçu dans ladite mémoire incorporée (31),
**caractérisé en ce que** :
ladite unité externe (10) comprend en outre une unité d'acceptation (13, 14) qui est adaptée pour accepter une requête qui est rapportée à une modification de réglage dans ledit terminal portable (20) en provenance d'un utilisateur dudit terminal portable (20), ladite unité d'envoi de courrier de modification de réglage (12, 14) étant agencée pour envoyer le courrier de modification de réglage en réponse à la requête reçue, ledit courrier de modification de réglage incluant un programme d'ordinateur qui additionne, supprime ou modifie une fonction dudit terminal portable (20) en modifiant de façon collective le contenu de ladite mémoire incorporée (31) et dudit support de stockage (40, 50) dudit terminal portable (20) ; et
ledit processeur (32) étant en outre adapté, lorsque ledit support de stockage (40, 50) est remplacé par un autre support de stockage, pour mettre à jour le contenu dudit autre support de stockage en déroulant le programme d'ordinateur qui est contenu dans le courrier de modification de réglage qui est stocké dans ladite mémoire incorporée (31) et au moyen d'une communication processeur à processeur entre ledit processeur (32) et une section de commande (42, 52) dudit autre support de stockage.

6. Programme pour permettre qu'un dispositif externe (10) télécommande un terminal portable (20) qui est constitué par un corps principal (30) qui est muni d'une mémoire incorporée (31) et par un support de stockage attachable/détachable (40, 50), **caractérisé par** un moyen de code de programme qui a pour effet qu'un ordinateur met en oeuvre :
une étape d'envoi de courrier de modification de réglage consistant à envoyer un courrier de modification de réglage au moyen dudit dispositif externe (10) sur ledit terminal portable (20), qui modifie le contenu de ladite mémoire incorporée (31) et dudit support de stockage (40, 50) dudit terminal portable (20) ;
une étape de stockage consistant à stocker le courrier de modification de réglage reçu dans ladite mémoire incorporée (31) ; et
une étape d'acceptation d'une requête par ledit dispositif externe (10) qui est rapportée à une modification de réglage dans ledit terminal portable (20) en provenance d'un utilisateur dudit terminal portable (20), ladite étape d'envoi de courrier de modification de réglage étant réalisée en réponse à la requête reçue ;
ledit courrier de modification de réglage incluant un programme d'ordinateur qui additionne, supprime ou modifie une fonction dudit terminal portable (20) en modifiant de façon collective le contenu de ladite mémoire incorporée (31) et dudit support de stockage (40, 50) dudit terminal portable (20) ; et
une étape de mise à jour de support consistant à, lorsque ledit support de stockage (40, 50) est remplacé par un autre support de stockage, mettre à jour le contenu dudit autre support de stockage en déroulant le programme d'ordinateur qui est contenu dans le courrier de modification de réglage qui est stocké dans ladite mémoire incorporée (31).
